(19) Europäisches Patentamt / European Patent Office / Office européen des brevets

(11) **EP 4 723 587 A1**

(12) **EUROPEAN PATENT APPLICATION**

(43) Date of publication:
08.04.2026 Bulletin 2026/15

(21) Application number: 25204196.7

(22) Date of filing: 24.09.2025

(51) International Patent Classification (IPC):
$H04L\ 47/127^{(2022.01)}$    $H04L\ 47/193^{(2022.01)}$
$H04L\ 47/215^{(2022.01)}$    $H04L\ 47/283^{(2022.01)}$
$H04L\ 47/31^{(2022.01)}$    $H04L\ 47/33^{(2022.01)}$

(52) Cooperative Patent Classification (CPC):
H04L 47/31; H04L 47/127; H04L 47/193;
H04L 47/215; H04L 47/283; H04L 47/33

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.10.2024 FI 20246189

(71) Applicant: Nokia Solutions and Networks Oy
02610 Espoo (FI)

(72) Inventors:
• BOLETTIERI, Simone
  Antwerp (BE)
• DE SCHEPPER, Koen
  Boortmeerbeek (BE)

(74) Representative: Nokia EPO representatives
Nokia Technologies Oy
Karakaari 7
02610 Espoo (FI)

(54) **RATE CONTROLLER FOR ECN**

(57)    Described herein is a communication node, configured to process a communication between a sender application and a receiver application, the communication node comprising: at least one processor, and at least one memory storing instructions that, when executed by the at least one processor, cause the communication node at least to: mark one or more of a plurality of packets received from the sender application, wherein the remaining unmarked packets have an arriving data rate at the communication node that is not greater than a target serving data rate of the communication node processing arrived packets; and send, to the receiver application, the plurality of packets and a corresponding marking indication, wherein the marking indication is intended to inform the sender application of the marked one or more packets, wherein the communication node is further configured to adapt at least one marking-related parameter for marking the one or more packets by: measuring a current value of at least one adaptation parameter associated with at least one packet received and/or at least one packet marked in a current time interval; determining a derived smoothed value of the at least one adaptation parameter for a next time interval based on a combination of the measured current value of the at least one adaptation parameter in the current time interval and a previous value of the at least one adaptation parameter derived and smoothed in a previous time interval for the current time interval; and adapting a value of the at least one marking-related parameter in the next time interval based on the derived smoothed value of the at least one adaptation parameter for the next time interval.

Fig. 4

EP 4 723 587 A1

**Description**

TECHNOLOGY

The present disclosure relates to rate control in a network or a communication system, in particular to rate control based on marking of packets that exceed a target data rate for the network or system.

BACKGROUND

Any discussion of the background art throughout the specification should in no way be considered as an admission that such art is widely known or forms part of common general knowledge in the field.

Typical Network design is optimized to transport congestion-controlled Internet protocols like TCP, QUIC/UDP, TFRC/UDP, and etc. Any traffic flow and protocol that is traversing the internet in a session with more than 10 packets is expected to be (and usually is) congestion controlled with a Reno-friendly algorithm. The congestion controls defined during the last 40 years all require a queue to be controlled efficiently. The bigger the available queue space the better the achievable throughput and the more reliable and efficient (less loss) the packets are delivered. This resulted in Networks (NWs) that will block the packet scheduling to control the rate and build a queue (a waiting line in the NW buffers). In other words, to slow down the rate of congestion controlled flows, the NW would first delay a portion of their packets in flight in a queue, and later could start dropping a small amounts of packets. Lost packets will then cause the application to reduce the number of packets in flight, thus allowing the NW to keep the delay and required memory under control.

In *RFC9331,* the next generation low latency congestion control requirements are defined in such a way that the network is not required to build a queue to perform rate control. Rate control of applications that implement the Prague requirements (for instance, as described in *draft-briscoe-iccrg-prague-congestion-control-03 - Prague Congestion Control (ietf.org)* and implemented in Linux *linux/net/ipv4/tcp_prague.c at ratebase · L4STeam/linux · GitHub)* can be done with marking a bit in the IP header of packets.

Hence, there is a need to provide a mechanism that will optimize this marking decision.

Typically, AQM (active queue management) is used to control drops or marks of packets (see RFC9332). A scheduler will control the rate by initially blocking the servicing of a queue. Then an AQM algorithm will determine the latency or size of the queue and apply an AQM generated marking or dropping decision.

Alternatively, packets are not delayed (scheduled or shaped) but immediately forwarded and policed. The flow rate is measured with a token bucket or a virtual queue is used to check compliance with a traffic model that has configured a rate and burst envelope.

Some NWs will police the rate (r), based on the amount of packets or bytes or bits (c) that are counted within a fixed or variable time interval (i) to derive the rate as $r = c / i$.

Hence, there is further a need for an optimization on top of these policer based rate controls, e.g., either with a virtual queue or token bucket, or with a size per interval measurement. In particular, there is a need to provide an improved and stable marking mechanism to make the serving data rate of the marking mechanism match a target data rate. Therein, preferably, the proposed improved marking mechanism applies to marking policers that do not drop but mark excess packets.

SUMMARY

In accordance with a first aspect of the present disclosure, there is provided a communication node, configured to process a communication between a sender application and a receiver application, the communication node comprising:

at least one processor, and
at least one memory storing instructions that, when executed by the at least one processor, cause the communication node at least to:

mark one or more of a plurality of packets received from the sender application, wherein the remaining unmarked packets have a data rate of arriving at the communication node that is not greater than a target serving data rate of the communication node processing arrived packets; and
send, to the receiver application, the plurality of packets and a corresponding marking indication, wherein the marking indication is intended to inform the sender application of the marked one or more packets,
wherein the communication node is further configured to adapt at least one marking-related parameter for marking the one or more packets by:

measuring a current value of at least one adaptation parameter associated with at least one packet received and/or at least one packet marked in a current time interval;
determining a derived smoothed value of the at least one adaptation parameter for a next time interval based on a combination of the measured current value of the at least one adaptation parameter in the current time interval and a previous value of the at least one adaptation parameter derived and smoothed in a previous time interval for the current time interval; and

adapting a value of the at least one marking-related parameter in the next time interval based on the derived smoothed value of the at least one adaptation parameter for the next time interval.

In some examples, the combination comprises a weighted sum of the measured current value and the previous value, with a first weight attributed to the measured current value and a second weight attributed to the previous value, wherein the second weight is smaller than 1, wherein a sum of the first weight and the second weight is equal to 1.

In some examples, the first weight is determined based on a duration of the current time interval.

In some examples, the derived smoothed value $\bar{p}_{n+1}$ of the at least one adaptation parameter for the next time interval, n + 1, is given by

$$\bar{p}_{n+1} = \bar{p}_n + (p_n - \bar{p}_n) \times g,$$

where $\bar{p}_n$ is the previous value of the at least one adaptation parameter derived and smoothed in the previous time interval for the current time interval n, $p_n$ is the measured current value of the at least one adaptation parameter in the current time interval n, and g is the first weight, wherein n is an integer.

In some examples, the at least one marking-related parameter comprises a marking ratio, wherein the marking ratio is a ratio of marked packets to total packets arriving at the communication node in a given time interval, wherein the network node is configured to apply an additional marking ratio in the next time interval having the derived smoothed value.

In some examples, the communication node has a serving data rate of packets arriving at the communication node and being processed by the communication node in a given time interval, wherein:

the at least one marking-related parameter comprises the serving data rate; and
the communication node is further configured to adapt a value of the serving data rate in the next time interval based on the derived smoothed value of the at least one adaptation parameter and the target serving data rate of the communication node.

In some examples, the value $r_{n+1}$ of the serving data rate in the next time interval, n + 1, is given by

$$r_{n+1} = r_t \times (1 - \bar{p}_{n+1}),$$

where $r_t$ is the target serving data rate and $\bar{p}_{n+1}$ is the derived smoothed value of the at least one adaptation parameter for the next time interval, wherein n is an integer.

In some examples, the at least one adaptation parameter is derived based on any one of the following options: an arrival rate, a marking rate and an excess rate,
wherein:

the arrival rate $r_a$ is a data rate of packets arriving at the communication node in a given time interval, wherein $r_a = \frac{c_a}{i}$ and $c_a$ is a number of arrived packets in the given time interval;
the marking rate $r_m$ is a data rate of packets being marked at the communication node in the given time interval, wherein $r_m = \frac{c_m}{i}$ and $c_m$ is a number of marked packets in the given time interval; and
the excess rate $r_e$ is a data rate of packets exceeding the target serving data rate $r_t$ in the given time interval, wherein $r_e = \frac{c_e}{i}$ and $c_e$ is a number of excess packets in the given time interval,
wherein $c_t$ is a target number of arrived packets being processed by the communication node in the given time interval, and $r_t = \frac{c_t}{i}$, wherein when $c_a > c_t$, $c_e = c_a - c_t$ and otherwise $c_e = 0$,

wherein i is a duration of the given time interval.

In some examples, the at least one adaptation parameter is derived based on an amplification of a value of the any one of said options.

In some examples, the at least one adaptation parameter p is given by

$$p = X \times (\mu - 1)$$

where $\mu$ is a utilization ratio that is a ratio between any one of said options and the target serving data rate, and X is a positive amplification constant, wherein

when the at least one adaptation parameter is derived based on the arrival rate $r_a$, $\mu$ is given by:
$$\mu = \frac{r_a}{r_t} \text{ or } \mu = \frac{c_a}{c_t};$$
when the at least one adaptation parameter is derived based on the marking rate $r_m$, $\mu$ is given by:
$$\mu = \frac{r_m}{r_t} + 1 \text{ or } \mu = \frac{c_m}{c_t} + 1; \text{ and}$$
when the at least one adaptation parameter is derived based on the excess rate $r_e$, $\mu$ is given by:
$$\mu = \frac{r_e}{r_t} + 1 \text{ or } \mu = \frac{c_e}{c_t} + 1.$$

In some examples, a value of the marking-related parameter in the next time interval is derived based on a sum of the derived smoothed value of the at least one adaptation parameter in the next time interval and the measured current value of the at least one adaptation parameter in the current time interval.

In some examples, a value $p_{t,n+1}$ of the marking-related parameter in the next time interval, $n + 1$, is given by

$$p_{t,n+1} = (\bar{p}_{n+1} + p_n) \times m$$

where $p_{t,n+1}$ is capped between 0 and 1, wherein $\bar{p}_{n+1}$ is the derived smoothed value of the at least one adaptation parameter in the next time interval, wherein $p_n$ is the measured current value of the at least one adaptation parameter in the current time interval $n$, wherein when $p_n$ = 0, $m$ = 0, and when $p_n > 0$, $m$ = 1.

In some examples, the measured current value of the at least one adaptation parameter is capped with a maximum value.

In some examples, the marking ratio is given by

$$\frac{c_m}{r_t \times i}$$

where $c_m$ is a number of marked packets in a given time interval or a number of bytes in the marked packets in the given time interval, $r_t$ is the target serving data rate, and $i$ is a duration of the given time interval, wherein the target serving data rate is counted by number of packets when $c_m$ is calculated by counting number of packets or the target serving data rate is counted by bytes in the packets when $c_m$ is calculated by counting bytes in the packets.

In some examples, a time interval is configured to match a Round Trip Time, RTT, of an L4S/Prague compatible application, wherein preferably the time interval has a length of 25ms or a maximum expected RTT if the maximum expected RTT is greater than 25ms.

In some examples, the network is configured to implement an excess marker scheme for performing the marking, wherein the excess marker scheme is preferably a Virtual Queue, or a Token Bucket.

In accordance with a second aspect of the present disclosure, there is provided a system comprising a communication node according to any one of the first aspect and the related examples, a sender application and a receiver application, wherein:

the receiver application is configured to receive, from the communication node, the plurality of packets and the corresponding marking indication, and to instruct the sender application to adapt, based on the corresponding marking indication, a sending data rate for further packets following said plurality of packets.

In some examples, the communication node is further configured to include the corresponding marking indication in a respective packet header of the marked one or more packets.

In accordance with a third aspect of the present disclosure, there is provided a method of a communication node, configured to process a communication between a sender application and a receiver application, the method comprising:

marking one or more of a plurality of packets received from the sender application, wherein the remaining unmarked packets have an arriving data rate at the communication node that is not greater than a target serving data rate of the communication node processing arrived packets; and
sending, to the receiver application, the plurality of packets and a corresponding marking indication, wherein the marking indication is intended to inform the sender application of the marked one or more packets,
wherein the method further comprises adapting at least one marking-related parameter for marking the one or more packets by:

measuring a current value of at least one adaptation parameter associated with at least one packet received and/or at least one packet marked in a current time interval;
determining a derived smoothed value of the at least one adaptation parameter for a next time interval based on a combination of the measured current value of the at least one adaptation parameter in the current time interval and a previous value of the at least one adaptation parameter derived and smoothed in a previous time interval for the current time interval; and
adapting a value of the marking-related parameter in the next time interval based on the derived smoothed value of the at least one adaptation parameter for the next time interval.

In accordance with a fourth aspect of the present disclosure, there is provided a method of a system comprising a communication node according to any one of the first aspect and the related examples, a sender application and a receiver application, wherein the method further comprises:

the receiver application receiving, from the communication node, the plurality of packets and the corresponding marking indication, and instructing the sender application to adapt, based on the corresponding marking indication, a sending data rate for further packets following said plurality of packets.

In accordance with a fifth aspect of the present disclosure, there is provided a computer program comprising instructions for causing an apparatus to perform the method according to the third aspect, or for causing an apparatus to perform the method according to the fourth aspect.

In accordance with a sixth aspect of the present disclosure, there is provided a memory storing computer readable instructions for causing an apparatus to perform the method according to the third aspect, or for causing an apparatus to perform the method according to the fourth aspect.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

BRIEF DESCRIPTION OF THE DRAWINGS

Example embodiments of the disclosure will now be described, by way of example only, with reference to the accompanying drawings in which:

Figure 1 schematically illustrates an example of a Virtual Queue based marker policer applying a fixed marking threshold;
Figure 2 schematically illustrates another example of a Virtual Queue based marker policer applying a fixed marking threshold;
Figure 3 schematically illustrates an example of an excess marking Virtual Queue implementation according to an example embodiment of the present disclosure;
Figure 4 schematically illustrates an example of an excess marker compensation method according to an example embodiment of the present disclosure;
Figure 5A schematically illustrates an example of the excess marking operations included in an excess marker compensation method according to an example embodiment of the present disclosure;
Figure 5B schematically illustrates an example of the compensation operations included in an excess marker compensation method according to an example embodiment of the present disclosure;
Figure 6 schematically illustrates another example of an excess marker compensation method according to an example embodiment of the present disclosure;
Figure 7 schematically illustrates yet another example of an excess marker compensation method according to an example embodiment of the present disclosure; and
Figure 8 schematically illustrates yet another example of an excess marker compensation method according to an example embodiment of the present disclosure.

DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth®, personal communications services (PCS), ZigBee®, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or applicati on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:

    Option 1 (1A-like split):

- The function split in this option is similar to the 1A architecture in DC. RRC is in the central unit. PDCP, RLC, MAC, physical layer and RF are in the distributed unit.

    Option 2 (3C-like split):

- The function split in this option is similar to the 3C architecture in DC. RRC and PDCP are in the central unit. RLC, MAC, physical layer and RF are in the distributed unit.

    Option 3 (intra RLC split):

- Low RLC (partial function of RLC), MAC, physical layer and RF are in the distributed unit. PDCP and high RLC (the other partial function of RLC) are in the central unit.

    Option 4 (RLC-MAC split):

- MAC, physical layer and RF are in the distributed unit. PDCP and RLC are in the central unit.

    Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:

- The physical layer offers to the MAC sublayer transport channels;
- The MAC sublayer offers to the RLC sublayer logical channels;

- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:

- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:

- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/-signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

References are now made to the figures. In particular, it is to be noted that identical or like reference numbers used in the figures of the present disclosure may, unless indicated otherwise, indicate identical or like elements, such that repeated description thereof may be omitted for reasons of conciseness.

As illustrated above, the present disclosure generally seeks to provide an improved excess marking mechanism with stable marking performance that matches a target serving data rate of the marking mechanism. Therein, the target serving data rate refers to a target data rate of packets arriving at a communication node and being processed by the communication node, wherein the communication node is configured to perform the marking mechanism.

The method and its implementation exmples proposed in accordance with the present disclosure not only may be performed by or applicable to a NW node that receives packets from a UE, but also may be performed by or applicable to any communication node that processes packets between a sender application and a receiver application and intends to control the rate (i.e., data rate) between sender applications and receiver applications, by marking the packets towards the receivers, with the intension that the receivers informs their senders with the amount of marked and non-marked packets, such that the sender can make a decision to adapt the future sending rate.

In the present disclosure, the expressions "(data) rate" and "(data) rate of the packets" refer to a rate that is either calculated by counting the number of packets or by counting the bytes or bits in those packets. Therefore, for example, given a time interval n, with a duration of $i$ ms, the "data rate of packets being processed" refers to the counted / calculated number of packets being processed per $ms$, or the counted / calculated bytes or bits being processed per ms. This similarly applies to "data rate of packets arriving at the communication node", "data rate of packets being marked" and "data rate of packets in excess or exceeding a target serving data rate". Therefore, it is the common knowledge that the data rate can be calculated either by number of packets or by the corresponding bytes or bits in those packets, depending on the application scenario. In particular, the "data" relating to or included in packets can be counted either by the number of packets or the number of bytes or bits in those packets.

In addition, in the present disclosure, the term "rate" refers also to the above-described "data rate". Therefore, "serving rate", "target serving rate", "excess rate" refer to a corresponding data rate being calculated and/or given as input of the makring mechanism as described above.

In the present disclosure, an arrival rate, a marking rate and an excess rate refer to the following:

the arrival rate $r_a$ is a data rate of packets arriving at the communication node in a given time interval, wherein $r_a = \frac{c_a}{i}$ and $c_a$ is a number of arrived packets in the given time interval;
the marking rate $r_m$ is a data rate of packets being marked at the communication node in the given time interval, wherein $r_m = \frac{c_m}{i}$ and $c_m$ is a number of marked packets in the given time interval; and

the excess rate $r_e$ is a data rate of packets exceeding the target serving data rate $r_t$ in the given time interval, wherein $r_e = \frac{c_e}{i}$ and $c_e$ is a number of excess packets in the given time interval, wherein $c_t$ is a target number of arrived packets being processed by the communication node in the given time interval, and $r_t = \frac{c_t}{i}$, wherein when $c_a > c_t$, $c_e = c_a - c_t$ and otherwise $c_e = 0$.

Therein, i is a duration of the given time interval.

In the present disclosure, the system rate is the rate of packet (or count of packet per interval) forwarded by the communication node implementing the excess marker updated every interval (including packets marked and non marked that are forwarded).

With a drop policer, all packets exceeding the policer target rate are dropped (or deprioritized). On the contrary, with a policer that marks, the packets that are marked and forwarded will cause the system rate to be higher than what is configured as a target rate because packets are marked only after the target rate is exceeded. To avoid this, packets that are marked can be included in a virtual queue counter or token bucket counter. As such the excess (i.e., quota of packets above the target rate) is accumulated, and the policer will mark all packets until the virtual queue or token bucket counter is again below the target rate (threshold).

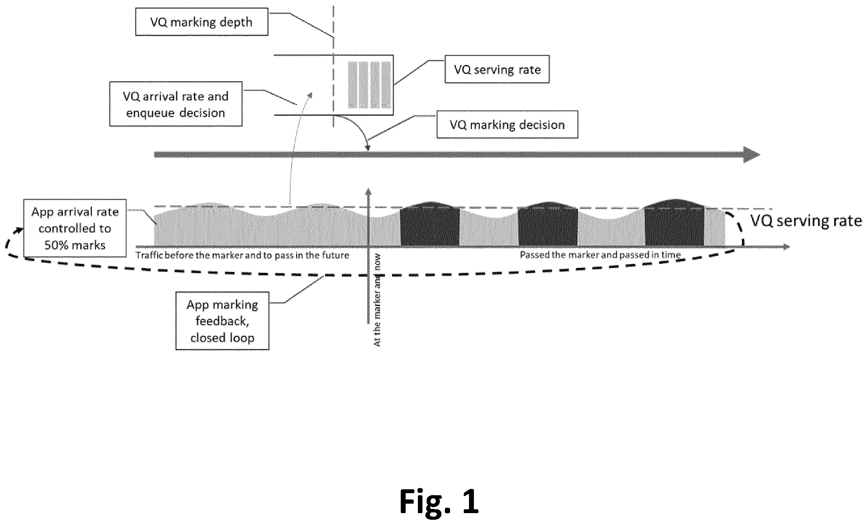

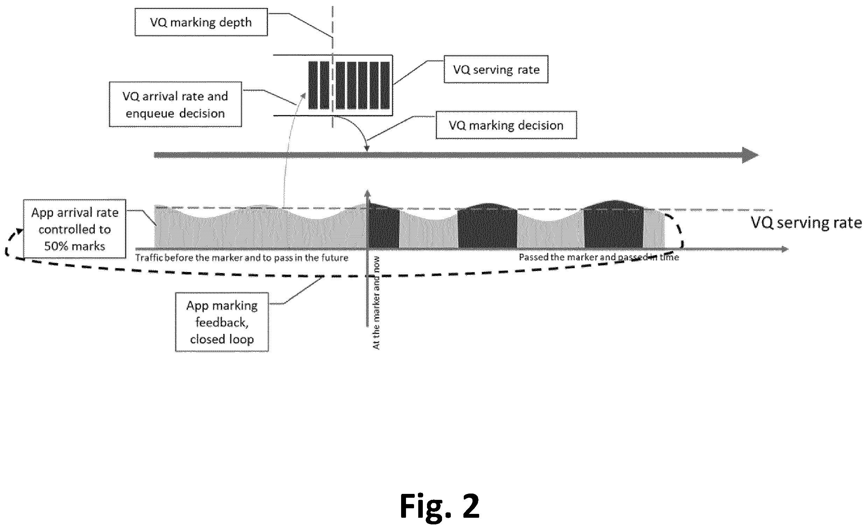

In Figures 1 and 2 it is provided an example of a Virtual Queue-based marker policer that enqueues (in the virtual queue) packets exceeding the marking threshold. Typically, a fixed threshold of the VQ depth is used for the marking decision.

Figure 1 illustrates the case when the virtual Q is below the threshold, i.e., when the virtual queue filling is below the marking threshold, and it is not marking packets.

Figure 2 illustrates the case when the virtual Q is above the threshold, i.e., when the virtual queue filling is above the marking threshold and it marks all packets as long as the virtual queue is above the threshold.

Figure 1 and Figure 2 have drawbacks of having a large variation of system rate around the target serving data rate of the system.

Alternatively, also a soft marking slope can be used to gradually increase the number of marks until it fits the required number of marks to control to the rate, like in a RED (Random Early Discard) AQM. Still the angle of the slope determines if the flow will be stable or oscillate. This slope needs to be adapted to the responsiveness of the traffic, which is not always possible. Nevertheless, with these mechanisms the average system rate will be around the target, but the immediate system rate will vary around that target with a frequency and amplitude depending on the responsiveness to the marks of the packet sender. The marks will also have a typical pattern of long trains with marked packets and long trains with non-marked packets.

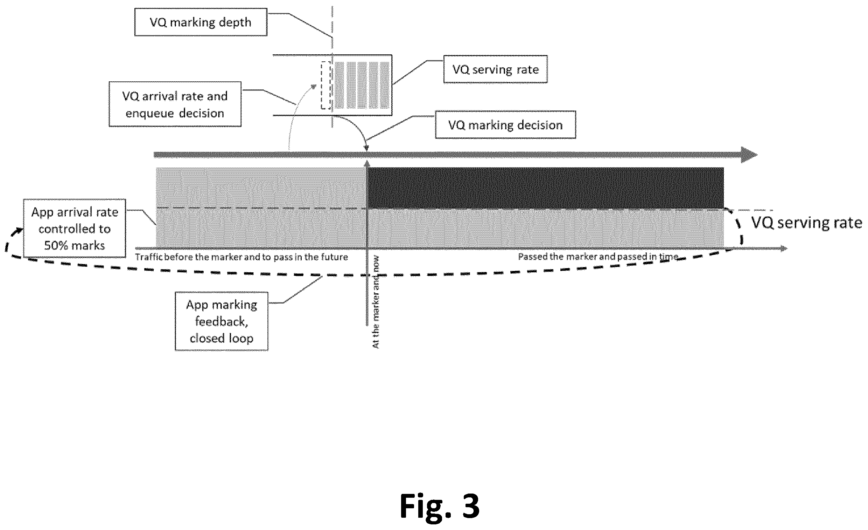

Therefore, an excess marking Virtual Queue implementation is preferred, where only the packets that exceed the configured rate are marked and these marks are typically spread evenly without trains over the non-marked packets, as shown in Figure 3.

Figure 3 illustrates an example of an excess marking Virtual Queue implementation that does not enqueue (in the virtual queue) the packets exceeding the marking threshold, and only marks packets that would cause the queue to grow above the threshold (i.e., only the packets that exceeds the VQ serving rate are marked).

As shown in Figure 3, packets that are above the threshold are only marked and forwarded, but not counted (i.e., not virtually enqueued) in the virtual queue. Accordingly, the target VQ rate of an excess marker defines the non-marked rate. If the required marking ratio becomes high, then also the excess rate will accordingly grow (e.g., 50% marking doubles the throughput as shown in Figure 3). However, this implementation has the disadvantage that the system rate would be always above the VQ serving rate. Although Figure 3 shows more stable marking pattern compared to Figures 1 and 2, but Figure 3 causes systematic system rate overshooting the target serving data rate of the system.

In view of the above, it is proposed in accordance with the present disclosure an optimization of an excess marker (for example implemented via a Virtual Queue as illustrated in Figure 3, but also applicable to a Token Buket or other rate-based excess markers), which adds a compensation method (i.e., an algorithm) optimized e.g., for L4S/Prague flows. Specifically, the present disclosure defines the target rate (i.e., the target serving data rate of the marking mechanism) as the rate the system rate is expected to converge using an excess marker. The target rate according to the present disclosure may be provided with a pre-configured value, and may alternatively be provided with a dynamically changing value, based on other mechanisms, e.g., based on system requirement, i.e., depending on the application scenario the skilled person is aware of different manners for configuring a value for the target rate. The present disclosure proposes a method (e.g., an algorithm) that allows to compensate the rate at which an excess marker marks packets, such that the system rate will always converge to the target rate.

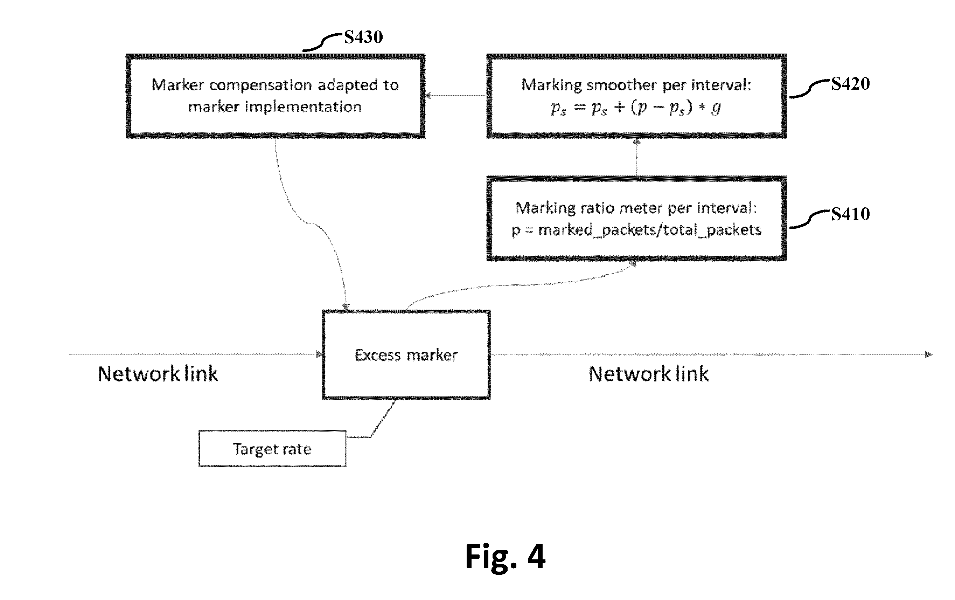

Figure 4 illustrates an example of a generalized functionality of the proposed method according to the present disclosure, performed by a communication node (which may be a network node or a UE as an example).

In this example, a marking ratio is measured at step S410 from the amount of marked and total packets, i.e., the marking ratio is a ratio of marked packets to total packets. As described above, the marking ratio may alternatively be measured based on the amount of marked bytes or bits and total bytes or bits in a given timer interval.

This marking ratio needs to be smoothed at step S420 to make the control loop stable. It typically has a measurement interval that is matching the L4S/Prague compatible application's round trip time (for example 25ms or the typical maximum expected RTT if that is bigger). For that measurement interval an exponential weighted moving average (EWMA) factor $g$ is used (for example 1/16) to add the new measurement value to the previous 1 - $g$ (with $g$ =1/16 it would be 15/16th) part of the previous smoothed average value. The value of 1/16 is a valid value if the interval measuring is 25ms. According to the present disclosure, the value of $g$ may be adapted/varied if the interval is different or varying. For example, the present disclosure proposes a reference value $g_r$ of 1/16 for a reference duration $i_r$ of 25ms, and accordingly, a value of $g$ is calculated by $\frac{g_r \times i}{i_r}$ , possibly/optionally capping $i$ or $g$ to a max time value (wherein $g$ is typically capped to a value below 1).

In the present disclosure, the "marking ratio" and the "marking probability" are used interchangeably. Independent of how many packets arrive, the specified marking ratio of packets is applied, typically with a deterministic ratio marker or a random marker ratio. For instance, if marking ratio is 20% and 100 packets arrive in the next interval, 20 packets are marked (deterministic, or on average if probabilistic), and if 10 packets arrive, only 2 packets get marked (on average).

Further, the marking ratio refers to a ratio of marked packets to arrived packets at the communication node in a given timer interval. This ratio may be calculated by counting packets or bytes or bits, as described above.

According to the present disclosure, if marks (i.e., marked packets) need to be applied, it is either with a not-marking-rate, where packets are marked if their rate is in excess, and a compensation marking rate is then subtracted from this non-marking-rate, to mark more packets. In the other case a marking ratio needs to be used, which marks random or deterministic, based on the amount of arriving packets.

At step S430, this smoothed average marking probability is added to the excess marker, in a marker specific manner.

In the above description, the marking ratio is used an example, wherein additionaly or alternatively, an utilization ratio is calculated and smoothed with the same procedures as described above.

- Therein, the unitlity ratio $\mu$ may be calculated based on any one of the following options: the arrival rate, the marking rate and the excess rate.

- When the unitlity ratio is derived based on the arrival rate $r_a$, $\mu$ is given by: $\mu = \frac{r_a}{r_t}$ or $\mu = \frac{c_a}{c_t}$ ;

- When the unitlity ratio is derived based on the marking rate $r_m$, $\mu$ is given by: $\mu = \frac{r_m}{r_t} + 1$ or $\mu = \frac{c_m}{c_t} + 1$ ; and

- When the unitlity ratio is derived based on the excess rate $r_e$, $\mu$ is given by: $\mu = \frac{r_e}{r_t} + 1$ or $\mu = \frac{c_e}{c_t} + 1$ .

The further embodiments are all applying the above generalited functionality of the method proposed in accordance with the present disclosure. For some specific marker implementation embodiments the meter and smoother can be simplified or optimized to achieve the same result. Note that the "meter" and "smoother" illustrated in Figure 4 refer merely to the corresponding functionalities described in the above steps and do not refer to actual entities.

The present disclosure proposes to measure the amount of marks and to compensate the excess marker marking rate to make the system rate match the target rate (in contrast to the state of the art, where in the above non-compensated examples the VQ serving rate is kept fixed and equal to the target rate which results in a system rate that is always above the target rate). The system rate is the rate of packet (or count of packet per interval) forwarded by the communication node implementing the excess marker updated every interval (including packets marked and non marked that are forwarded).

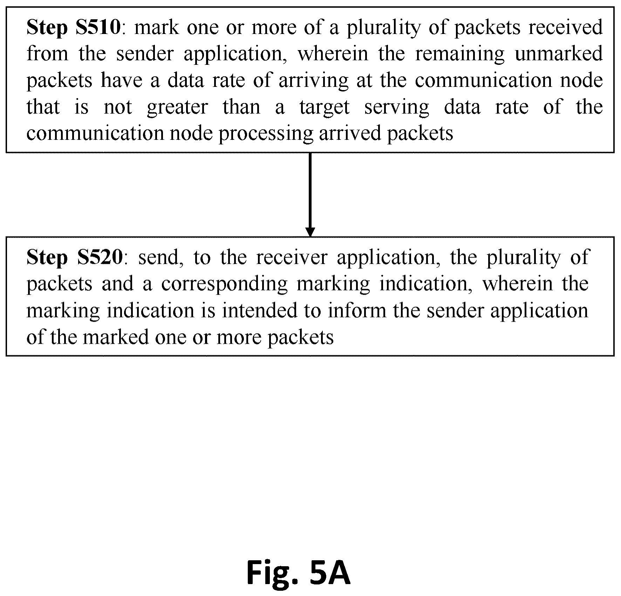

Figure 5A illustrates an example of the excess marking operations included in the excess compensation method proposed in accordance with the present application. The steps are performed by a communication node that is configured to process a communication (i.e., packets transmitted) between a sender node/application and a receiver node/application.

At step S510: the communication node marks one or more of a plurality of packets received from the sender application, wherein the remaining unmarked packets have a data rate of arriving at the communication node that is not greater than a target serving data rate of the communication node processing arrived packets. In other words, the communication node marks merely the packets that are in excess in comparison to target serving data rate (i.e., a target system rate), so as to ensure that the communication node receives packets at a data rate that is lower than than the target serving data rate.

At step S520: the communication node sends, to the receiver application, the plurality of packets and a corresponding marking indication, wherein the marking indication is intended to inform the sender application of the marked one or more packets. The marking indication is preferably provided for each of the one or more marked packets, for instance, by including a bit in the header of each of the one or more marked packets.

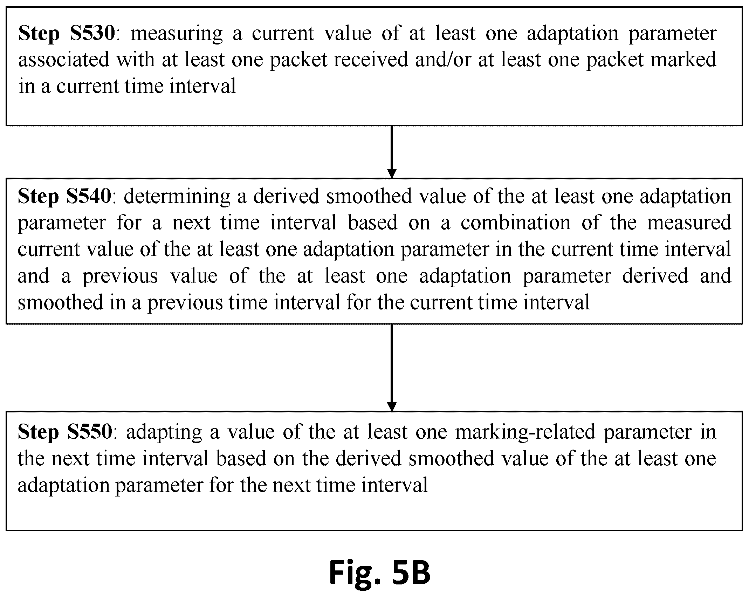

Figure 5B illustrates an example of the compensation operations included in the excess compensation method proposed in accordance with the present application. The steps are performed by the communication node as for Figure 5A.

As shown in Figure 5, the communication node adapts at least one marking-related parameter for marking the one or more packets by the following steps. The marking related parameter is a parameter applied for or associated with marking packets, i.e., for making a marking decision.

At step S530: the communication node measures a current value of at least one adaptation parameter associated with at least one packet received and/or at least one packet marked in a current time interval. The current time interval is an interval of a predetermined duration as can be configured depending on the application scenario. For details refer to the above description. Preferably, the steps in accordance with the present disclosure are performed at the end of the corresponding timer interval.

Therein, a value of the at least one adapation parameter is derived either based on the respective number of packets or the corresponding number of bytes or bits counted / calculated in a given timer interval.

Preferably, the at least one adaptation parameter is derived based on any one of the following options: the arrival rate, the marking rate and the excess rate. For example, the at least one adaptation parameter comprises the utilization ratio as described above for Figure 4.

At step S540: the communication node determines a derived smoothed value of the at least one adaptation parameter for a next time interval based on a combination of the measured current value of the at least one adaptation parameter in the current time interval and a previous value of the at least one adaptation parameter derived and smoothed in a previous time interval for the current time interval.

Preferably, the derived smoothed value $\bar{p}_{n+1}$ of the at least one adaptation parameter for the next time interval, n + 1, is given by

$$\bar{p}_{n+1} = \bar{p}_n + (p_n - \bar{p}_n) \times g,$$

where $\bar{p}_n$ is the previous value of the at least one adaptation parameter derived and smoothed in the previous time interval for the current time interval $n$, $p_n$ is the measured current value of the at least one adaptation parameter in the current time interval $n$, and $g$ is the first weight attributed to the current value, wherein n is an integer.

At step S550: the communication node adapts a value of the at least one marking-related parameter in the next time interval based on the derived smoothed value of the at least one adaptation parameter for the next time interval.

Accordingly, it is proposed to adapt the marking scheme, by adapting the marking-related parameter for the next time interval based on the moving average of the values of the at least one adaptation parameter in the previous and current time intervals. Preferably, the previous, current and next time intervals are consecutive. Preferable, the previous, current and next intervals are of the same duration.

The moving average may provide for the previous and current values a respective weight, wherein the values of the weights may be dependent on the duration of the time intervals.

Different ways are possible to measure and compensate the excess rate (i.e., the marking ratio), which depends also on the marker implementation. Three implementation examples are provided in accordance with the present disclosure.

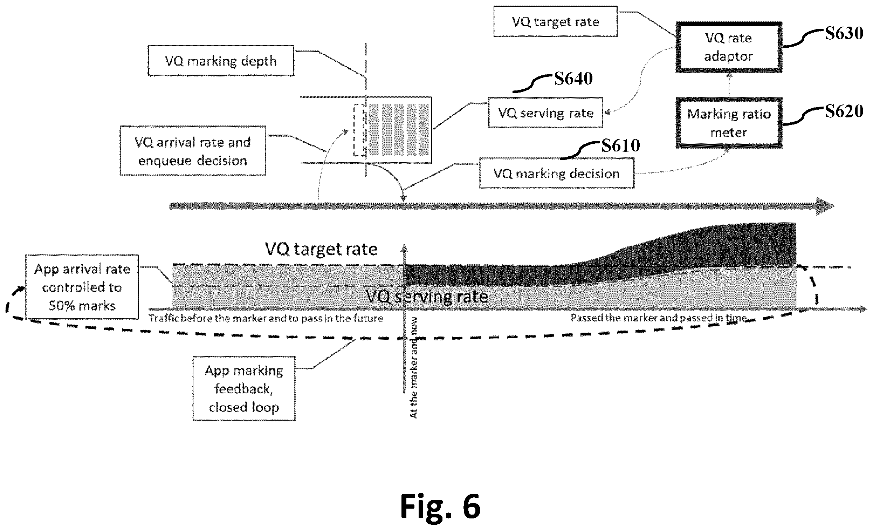

The first implementation example in Figure 6 applies to a VQ based excess marker. The example focuses on adapting the VQ serving rate to make the system rate converge to a target rate, which is given as a parameter of the method (i.e., an algorithm).

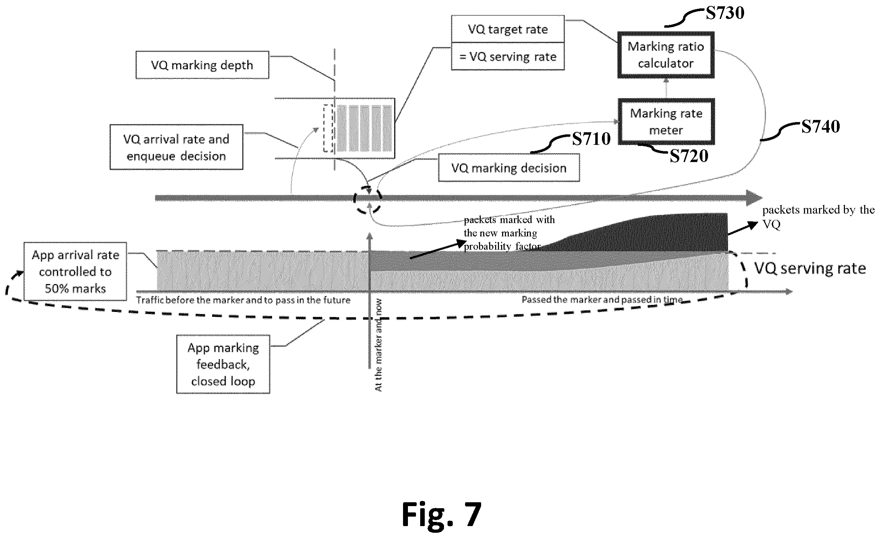

The second implementation example in Figure 7 applies also to a VQ based excess marker. The example adds an extra marking ratio to make the arrival rate converge to the VQ serving rate (which is set equal to the target rate) effectively leading the excess marker to converge to not marking (when the excess marker is marking 0%, the excess is eliminated).

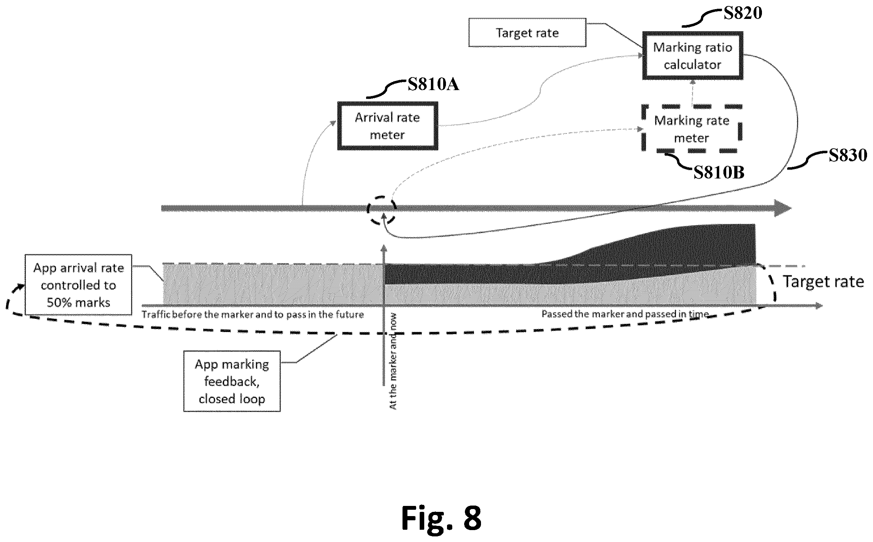

The third implementation example in Figure 8 applies to an implementation without a Virtual Queue, where marking and arrival rate measurements are used to generate marks.

As described above, in the present disclosure and also in the examples in Figures 6 to 8, the calculation of the corresponding rate may be based on either the number of packets or the number of bytes or bits, wherein the steps apply the same criterion for the marking and the marking compensation.

Figure 6 schematically illustrates an excess marking Virtual Queue that is driven by a VQ serving rate adaptor method. The objective of the VQ rate adaptor is to adjust the VQ serving rate such that the system rate matches the target rate. This compensation makes the serving data rate deviate from the target rate to allow the system rate converge to the target data rate.

The first example in Figure 6 is measuring the ratio of marked bytes to expected transmitted bytes in a time interval and derive from these samples a new VQ serving rate applied for the next time interval.

For example, with a time interval of $t_i$ in seconds and a target rate $r_t$ in bytes per second, at every end of the interval (i.e., during the current inteval) the following steps are performed:

- At step S610: the bytes in marked packets $c_m$ that

were counted in that interval (i.e., in the current interval) are read out; Namely that the marking rate is read out;

- At step S620: the marking ratio is calculated, as follows: $p = c_m/r_t * i)$ , where $p$ might be capped with a maximum value;

- Alternatively, at step S620, a unitlity ratio $\mu$ is calculated, wherein the unitlity ratio may be calculated based on any one of the following options: the arrival rate, the marking rate and the excess rate, as described above for Figure 4.

- At step S630: this utilization ratio (for example, the marking ratio) is then smoothed with an EWMA algorithm as a rate ratio $\bar{p} = \bar{p} + (p - \bar{p}) * g$ with $g$ a fraction smaller than one, for example $g = 1/16$, as explained in the general description above;

- Still at step S630: this ratio is then multiplied by the VQ target rate $r_t$ to derive the VQ serving rate: $r_s = r_t * (1 - \bar{p})$

- At step S640: this VQ serving rate $r_s$ is applied to the VQ for the next time interval.

Figure 7 schematically illustrates a marking rate calculator that is replacing the need for an excess Virtual Queue to keep on marking, while keeping the total arrival rate close to the VQ serving rate. Figure 7 illustrates three different shades of the gray color, wherein with the darkest gray area the packets marked by the VQ are highlighted and with the intermediate gray area the packets marked with the extra/new marking probability factor are highlighted.

The second implementation example in Figure 7 is measuring the ratio of marked bytes to expected transmitted bytes in a time interval and derive from these samples a new marking probability $p$. Then, in addition to the VQ markings, the algorithm also uses $p$ to probabilistically mark the arriving traffic for the next time interval.

For example, with a time interval of $t_i$ in seconds and a target rate $r_t$ in bytes per second, at every end of the interval (i.e., during the current inteval) the following steps are performed:

- At step S710: the bytes in marked packets $c_m$ that were counted in that interval are read out;

- At step S720: the marking ratio is calculated as follows: $p = c_m/(r_t * i)$;

- At step S730: this ratio is then smoothed with an EWMA algorithm as a marking ratio $\bar{p} = \bar{p} + (p - \bar{p}) * g$ with $g$ a fraction smaller than one, for example $g = 1/16$; and

- At step S740: for the next time interval, this marking ratio is then applied to the packets next to the VQ.

Figure 8 schematically illustrates a marking ratio calculator that is adapting its marking probability to keep the total arrival rate close to the target rate.

The third method in Figure 8 is measuring the total transmitted packets in a time interval and deriving a marking probability to keep the arrival rate close to a target rate.

For example, with a time interval of $t_i$ in seconds and a target rate $r_t$ in bytes per second, at every end of the interval (i.e., during the current inteval) the following steps are performed:

- At step S810A: the total bytes in the arrived packets $c_a$ that were counted in that interval are read out; (optionally at step S810B: the bytes in marked packets $c_m$ that were counted in that interval are read out); optionally at step S810C (not shown): the bytes in excess packets $c_e$ that were counted in that interval are read out

- At step S820: an utilization ratio is calculated for example as follows: $= \dfrac{c_a}{r_a * i}$ ; The utilization ratio may be calculated based on any one of the arrival rate, the marking rate and the excess rate, as described above for Figure 4.

- Still at step S820: an instantaneous probability ratio is derived from this utilization ratio, for example as follows: $p = X * (\mu - 1)$, with X a positive amplification constant, where $p$ might become negative, and might be capped within a positive maximum and (negative, zero or positive) minimum value; (optionally any other probability calculation is derived from the measured excess rate);

- Still at step S820: this instantaneous probability ratio is then smoothed with an EWMA algorithm as a marking probability $\bar{p} = \bar{p} + (p - \bar{p}) * g$ with $g$ a fraction, smaller than one, for example $g = 1/16$;

- Optionally, following step S810B: instead of the above operations at step S820 based on the counted bytes in the arrived packets $c_a$, step S820 is performed in that the smoothed marking probability is derived from the measured marking ratio: $p = \dfrac{c_m}{r_t * i}$ based on the counted bytes in marked packets $c_m$ and the smoothed probability is calculated as $\bar{p} = \bar{p} + (p - \bar{p}) * g$ with $g$ a fraction, smaller than one, for example $g = 1/16$;

- Optionally, following step S810C: instead of the above operations at step S820 based on the counted bytes in the arrived packets $c_a$, step S820 is performed in that the smoothed marking probability is derived from the measured marking ratio: $p = \dfrac{c_e}{r_t * i}$ based on the counted bytes in excess packets $c_m$ and the smoothed probability is calculated as $\bar{p} = \bar{p} + (p - \bar{p}) * g$ with $g$ a fraction, smaller than one, for example $g = 1/16$;

- At step S830: for the next time interval, the summed probability $p_t = (\bar{p} + p) * m$, with $m = 0$ when $p = 0$ and m = 1 when $p > 0$, capped between for example 0 and 1 is then applied as a marking probability to the packets during the next interval.

In summary, faced with the disadvantages in the typical traffic and marking methods where marks are set e.g., by a virtual Q that takes marked packets into account or only marks the excess traffic, it is proposed in accordance with the present disclosure an improved excess marking scheme, in particular with a compensation method for the excess marking scheme, for the system rate of packets being processed by the marking scheme to converge to the target data rate, leading to a stable control of the marking scheme and therefore a stable data flow in the network or the system.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

**List of abbreviations:**

| | |
|---|---|
| AQM: | Active Queue Management |
| EWMA: | Exponential Weighted Moving Average |
| L4S: | Low Loss, Low Latency and Scalable throughput |
| Q: | Queue |
| VQ : | Virtual Queue |
| ECN: | Explicit Congestion Notification |

**Claims**

1. A communication node, configured to process a communication between a sender application and a receiver application, the communication node comprising:

   at least one processor, and
   at least one memory storing instructions that, when executed by the at least one processor, cause the communication node at least to:

   mark one or more of a plurality of packets received from the sender application, wherein the remaining unmarked packets have a data rate of arriving at the communication node that is not greater than a target serving data rate of the communication node processing arrived packets; and send, to the receiver application, the plurality of packets and a corresponding marking indication, wherein the marking indication is intended to inform the sender application of the marked one or more packets, wherein the communication node is further configured to adapt at least one marking-related parameter for marking the one or more packets by:

measuring a current value of at least one adaptation parameter associated with at least one packet received and/or at least one packet marked in a current time interval;
determining a derived smoothed value of the at least one adaptation parameter for a next time interval based on a combination of the measured current value of the at least one adaptation parameter in the current time interval and a previous value of the at least one adaptation parameter derived and smoothed in a previous time interval for the current time interval; and
adapting a value of the at least one marking-related parameter in the next time interval based on the derived smoothed value of the at least one adaptation parameter for the next time interval.

2. The communication node according to claim 1, wherein the combination comprises a weighted sum of the measured current value and the previous value, with a first weight attributed to the measured current value and a second weight attributed to the previous value, wherein the second weight is smaller than 1, wherein a sum of the first weight and the second weight is equal to 1.

3. The communication node according to claim 2, wherein the first weight is determined based on a duration of the current time interval.

4. The communication node according to claim 2 or 3, wherein the derived smoothed value $\bar{p}_{n+1}$ of the at least one adaptation parameter for the next time interval, n + 1, is given by

$$\bar{p}_{n+1} = \bar{p}_n + (p_n - \bar{p}_n) \times g,$$

where $\bar{p}_n$ is the previous value of the at least one adaptation parameter derived and smoothed in the previous time interval for the current time interval n,

$p_n$ is the measured current value of the at least one adaptation parameter in the current time interval n, and $g$ is the first weight, wherein n is an integer.

5. The communication node according to any one of claims 1 to 4, wherein the at least one marking-related parameter comprises a marking ratio, wherein the marking ratio is a ratio of marked packets to total packets arriving at the communication node in a given time interval, wherein the network node is configured to apply an additional marking ratio in the next time interval having the derived smoothed value.

6. The communication node according to any one of claims 1 to 5, wherein the communication node has a serving data rate of packets arriving at the communication node and being processed by the communication node in a given time interval, wherein:

the at least one marking-related parameter comprises the serving data rate; and
the communication node is further configured to adapt a value of the serving data rate in the next time interval based on the derived smoothed value of the at least one adaptation parameter and the target serving data rate of the communication node.

7. The communication node according to any one of claims 1 to 6, wherein the at least one adaptation parameter is derived based on any one of the following options: an arrival rate, a marking rate and an excess rate, wherein:

the arrival rate $r_a$ is a data rate of packets arriving at the communication node in a given time interval, wherein $r_a = \frac{c_a}{i}$ and $c_a$ is a number of arrived packets in the given time interval;
the marking rate $r_m$ is a data rate of packets being marked at the communication node in the given time interval, wherein $r_m = \frac{c_m}{i}$ and $c_m$ is a number of marked packets in the given time interval; and
the excess rate $r_e$ is a data rate of packets exceeding the target serving data rate $r_t$ in the given time interval, wherein $r_e = \frac{c_e}{i}$ and $c_e$ is a number of excess packets in the given time interval, wherein $c_t$ is a target number of arrived packets being processed by the communication node in the given time interval, and $r_t = \frac{c_t}{i}$ , wherein when $c_a > c_t$, $c_e = c_a - c_t$ and otherwise $c_e = 0$,

wherein i is a duration of the given time interval.

8. The communication node according to claim 7, wherein the at least one adaptation parameter is derived based on an amplification of a value of the any one of said options.

9. The communication node according to any one of claim 7 to 8, wherein a value of the marking-related parameter in the next time interval is derived based on a sum of the derived smoothed value of the at least one adaptation parameter in the next time interval and the measured current value of the at least one adaptation parameter in the current time interval.

10. The communication node according to any one of claims 1 to 9, wherein the measured current value of the at least one adaptation parameter is capped with a maximum value.

11. The communication node according to any one of claims 1 to 10, wherein a time interval is configured to match a Round Trip Time, RTT, of an L4S/Prague compatible application, wherein preferably the time interval has a length of 25ms or a maximum expected RTT if the maximum expected RTT is greater than 25ms.

12. The communication node according to any one of claims 1 to 11, wherein the network is configured to implement an excess marker scheme for performing the marking, wherein the excess marker scheme is preferably a Virtual Queue, or a Token Bucket.

13. A method of a communication node, configured to process a communication between a sender application and a receiver application, the method comprising:

marking one or more of a plurality of packets received from the sender application, wherein the remaining unmarked packets have a data rate of arriving at the communication node that is not greater than a target serving data rate of the communication node processing arrived packets; and
sending, to the receiver application, the plurality of packets and a corresponding marking indication, wherein the marking indication is intended to inform the sender application of the marked one or more packets,
wherein the method further comprises adapting at least one marking-related parameter for marking the one or more packets by:

measuring a current value of at least one adaptation parameter associated with at least one packet received and/or at least one packet marked in a current time interval;
determining a derived smoothed value of the at least one adaptation parameter for a next time interval based on a combination of the measured current value of the at least one adaptation parameter in the current time interval and a previous value of the at least one adaptation parameter derived and smoothed in a previous time interval for the current time interval; and
adapting a value of the marking-related parameter in the next time interval based on the derived smoothed value of the at least one adaptation parameter for the next time interval.

14. A computer program comprising instructions for causing an apparatus to perform the method according to claim 13.

15. A memory storing computer readable instructions for causing an apparatus to perform the method according to claim 13.

**Fig. 1**

VQ serving rate

VQ serving rate

VQ marking decision

VQ arrival rate and enqueue decision

VQ marking depth

Passed the marker and passed in time

At the marker and now

Traffic before the marker and to pass in the future

App marking feedback, closed loop

App arrival rate controlled to 50% marks

**Fig. 2**

**Fig. 3**

**Fig. 4**

EP 4 723 587 A1

Step S510: mark one or more of a plurality of packets received from the sender application, wherein the remaining unmarked packets have a data rate of arriving at the communication node that is not greater than a target serving data rate of the communication node processing arrived packets

Step S520: send, to the receiver application, the plurality of packets and a corresponding marking indication, wherein the marking indication is intended to inform the sender application of the marked one or more packets

**Fig. 5A**

Step S530: measuring a current value of at least one adaptation parameter associated with at least one packet received and/or at least one packet marked in a current time interval

Step S540: determining a derived smoothed value of the at least one adaptation parameter for a next time interval based on a combination of the measured current value of the at least one adaptation parameter in the current time interval and a previous value of the at least one adaptation parameter derived and smoothed in a previous time interval for the current time interval

Step S550: adapting a value of the at least one marking-related parameter in the next time interval based on the derived smoothed value of the at least one adaptation parameter for the next time interval

Fig. 5B

Fig. 6

**Fig. 7**

Fig. 8

# EP 4 723 587 A1

Europäisches
Patentamt

European
Patent Office

Office européen
des brevets

## EUROPEAN SEARCH REPORT

**Application Number**

EP 25 20 4196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/362099 A1 (TILMANS OLIVIER [BE] ET AL) 9 November 2023 (2023-11-09) <br> * abstract; figures 1-6 * <br> * paragraphs [0007] - [0033], [0049], [0052], [0054], [0057] - [0072], [0077] - [0078], [0098] * <br> ----- | 1-15 | INV. <br> H04L47/127 <br> H04L47/193 <br> H04L47/215 <br> H04L47/283 <br> H04L47/31 <br> H04L47/33 |

**TECHNICAL FIELDS SEARCHED (IPC)**

H04L

The present search report has been drawn up for all claims

| Place of search | Date of completion of the search | Examiner |
|---|---|---|
| The Hague | 29 January 2026 | Cranley, Nikki |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 25 20 4196

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2026

| Patent document cited in search report | Publication date | Patent family member(s) | Publication date |
|---|---|---|---|
| US 2023362099 A1 | 09-11-2023 | EP 4277232 A1 <br> US 2023362099 A1 | 15-11-2023 <br> 09-11-2023 |

For more details about this annex : see Official Journal of the European Patent Office, No. 12/82